# EUROPEAN PATENT APPLICATION

(11) **EP 4 712 699 A1**
(43) Date of publication of application: **18.03.2026**
(21) Application number: 24200135.2
(22) Date of filing: 13.09.2024
(51) Int. Cl.: H05B 45/382, H02M 1/00, H02M 3/335, H05B 45/385, H05B 47/18

(54) **METHOD FOR EXTERNAL BUS BASED OFF-SWITCHING AN AT LEAST TWO-STAGE CONVERTER, CORRESPONDING LED DRIVER AND SYSTEM**

(71) Applicant: Tridonic GmbH & Co. KG, 6851 Dornbirn (AT)
(72) Inventor: Schneider, Miguel Philipp, 6851 Dornbirn (AT); Maldoner, Jakob, 6851 Dornbirn (AT); Dimic, Nikola, 6851 Dornbirn (AT)
(74) Representative: Rupp, Christian

(57) **Abstract**

A method for switching off an at least two-stage converter with the aid of an external bus signal is provided. Said method comprises the steps of switching off (101) a driver stage supplying an LED load when the external bus signal is received, and at least greatly reducing (102) a power transmission of a further driver stage supplying said driver stage, said further driver stage being electrically isolated and clocked on a primary side of the at least two-stage converter and having a regulated output voltage.

## Description

The invention relates to a method for external bus based off-switching an at least two-stage converter, a corresponding LED driver and system. In particular, the invention relates to a method for switching off an at least two-stage converter with the aid of an external bus signal, an at least two-stage LED driver being off-switchable by an external bus signal, and a system comprising the latter and an LED load.

Generally, use of at least two-stage converter for driving LED-based loads increases. Typically, more and more of such at least two-stage converters are controllable by an external bus signal. Disadvantageously, it can typically be observed that switching off such an at least two-stage converter by such an external bus signal can lead to a damage of the at least two-stage converter or to a flash of light with respect to the LED-based load when the at least two-stage converter is switched on again.

Accordingly, there is the object to provide a method for switching off an at least two-stage converter with the aid of an external bus signal, an at least two-stage LED driver being off-switchable by an external bus signal, and a system comprising the latter and an LED load, thereby overcoming such disadvantages.

This object is solved by the features of the first independent claim for a method for switching off an at least two-stage converter with the aid of an external bus signal, the features of the second independent claim for an at least two-stage LED driver being off-switchable by an external bus signal, and the features of the third independent claim for a system comprising such an at least two-stage LED driver and an LED load. The dependent claims contain further developments. Accordingly, the invention is described by the appended set of claims.

According to a first aspect of the invention, a method for switching off an at least two-stage converter with the aid of an external bus signal is provided. Said method comprises the steps of switching off a driver stage supplying an LED load when the external bus signal is received, and at least greatly reducing a power transmission of a further driver stage supplying said driver stage, said further driver stage being electrically isolated and clocked on a primary side of the at least two-stage converter and having a regulated output voltage.

Advantageously, an output voltage overshoot can efficiently and reliably be prevented. It is noted that the following implementation forms of the first aspect of the invention can further improve the method especially in this context.

According to an implementation form of the first aspect of the invention, reducing the power transmission of the further driver stage comprises manipulating a feedback signal returning an actual value of the regulated output voltage.

According to a further implementation form of the first aspect of the invention, reducing the power transmission of the further driver stage comprises manipulating a nominal value of the regulated output voltage.

According to a further implementation form of the first aspect of the invention, switching off the driver stage and/or reducing the power transmission of the further driver stage comprises entering a burst-mode of the at least two-stage converter.

According to a further implementation form of the first aspect of the invention, the method further comprises the step of using the driver stage for dimming the LED load, preferably depending on the external bus signal.

According to a further implementation form of the first aspect of the invention, the driver stage comprises or is a switch, preferably a PWM switch.

According to a further implementation form of the first aspect of the invention, the at least two-stage converter comprises or is a flyback converter, preferably a flyback converter with isolation.

According to a second aspect of the invention, an at least two-stage LED driver being off-switchable by an external bus signal is provided. Said at least two-stage LED driver comprises a driver stage for supplying an LED load, a further driver stage for supplying said driver stage, said further driver stage being electrically isolated and clocked on a primary side of the at least two-stage LED driver and having a regulated output voltage, and at least one control circuit on said primary side. In this context, the at least one control circuit is configured to switch off the driver stage when the external bus signal is received, preferably by using at least one further control circuit on a secondary side of the at least two-stage LED driver. In addition to this, the at least one control circuit is configured to at least greatly reduce a power transmission of the further driver stage.

Advantageously, an output voltage overshoot can efficiently and reliably be prevented. It is noted that the following implementation forms of the second aspect of the invention can further improve the at least two-stage LED driver especially in this context.

According to an implementation form of the second aspect of the invention, especially in the context of reducing the power transmission of the further driver stage, the at least one control circuit is configured to manipulate a feedback signal returning an actual value of the regulated output voltage.

According to a further implementation form of the second aspect of the invention, especially in the context of reducing the power transmission of the further driver stage, the at least one control circuit is configured to manipulate a nominal value of the regulated output voltage.

According to a further implementation form of the second aspect of the invention, especially in the context of switching off the driver stage and/or reducing the power transmission of the further driver stage, the at least one control circuit is configured to enter a burst-mode of the at least two-stage LED driver.

According to a further implementation form of the second aspect of the invention, the driver stage is configured to dim the LED load, preferably depending on the external bus signal.

According to a further implementation form of the second aspect of the invention, the driver stage comprises or is a switch, preferably a PWM switch.

According to a further implementation form of the second aspect of the invention, the at least two-stage LED driver comprises or is a flyback converter, preferably a flyback converter with isolation.

According to a third aspect of the invention, a system is provided. Said system comprises an at least two-stage LED driver according to the second aspect of the invention or any of its implementation forms, respectively, and an LED load supplied by said at least two-stage LED driver. Advantageously, an output voltage overshoot can efficiently and reliably be prevented.

Exemplary embodiments of the invention are now further explained with respect to the drawings by way of example only, and not for limitation. In the drawings:
- Fig. 1: shows a flow chart of an embodiment of the first aspect of the invention; and
- Fig. 2: shows an embodiment of the second and the third aspect of the invention.
With respect to Fig. 1, a flow chart of an embodiment of the method for switching off an at least two-stage converter with the aid of an external bus signal is illustrated.

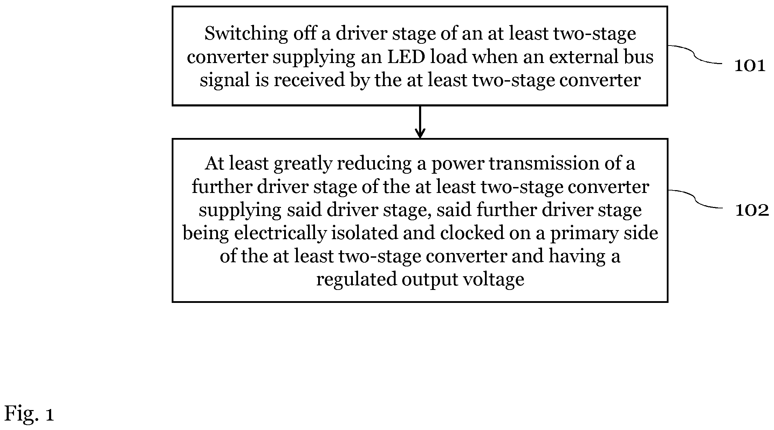

In accordance with said Fig. 1, a first step 101 comprises switching off a driver stage of the at least two-stage converter supplying an LED load when the external bus signal is received by the at least two-stage converter. Furthermore, a second step 102 comprises at least greatly reducing a power transmission of a further driver stage of the at least two-stage converter supplying said driver stage, said further driver stage being electrically isolated and clocked on a primary side of the at least two-stage converter and having a regulated output voltage.

It is noted that it might be particularly advantageous if at least greatly reducing the power transmission of the further driver stage comprises manipulating a feedback signal returning an actual value of the regulated output voltage.

It is further noted that it might be particularly advantageous if at least greatly reducing the power transmission of the further driver stage comprises manipulating a nominal value of the regulated output voltage.

With respect to the above-mentioned term "at least greatly reducing", it is noted that said term may especially understood as a corresponding reduction of at least 90 per cent, preferably of at least 95 per cent, more preferably of at least 97 per cent, most preferably of at least 99 per cent or of 100 per cent.

Furthermore, it is noted that it might be particularly advantageous if switching off the driver stage and/or at least greatly reducing the power transmission of the further driver stage comprises entering a burst-mode of the at least two-stage converter.

Moreover, it might be particularly advantageous if the method further comprises the step of using the driver stage for dimming the LED load, preferably depending on the external bus signal.

With respect to the above-mentioned driver stage, it is noted that it might be particularly advantageous if the driver stage comprises or is a switch, preferably a PWM switch.

With respect to the above-mentioned at least two-stage converter, it is noted that it might be particularly advantageous if the at least two-stage converter comprises or is a flyback converter, preferably a flyback converter with isolation.

It is further noted that the method as described above can be applied to or can make use of, respectively, an at least two-stage LED driver or a system comprising the latter, respectively, as described below.

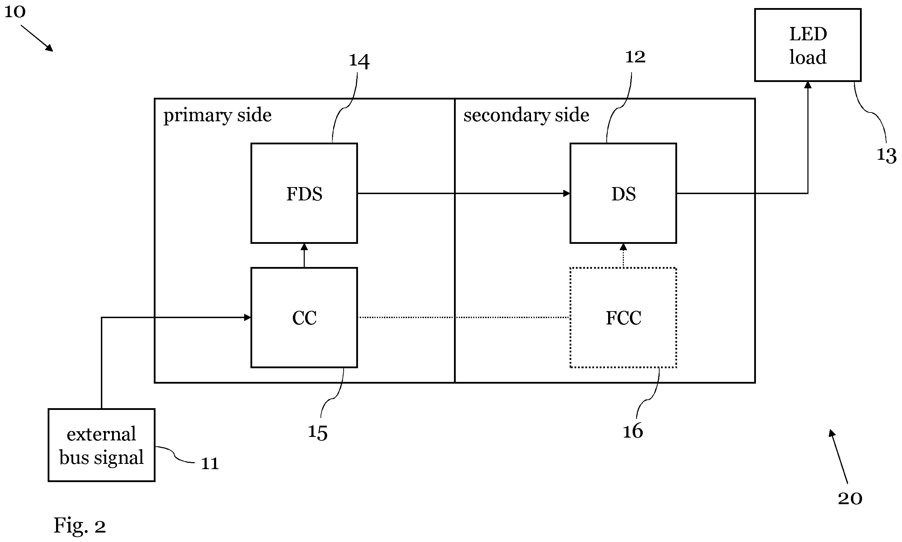

Finally, Fig. 2 depicts an embodiment of the at least two-stage LED driver 10 being off-switchable by an external bus signal 11. For the sake of completeness, it is noted that said Fig. 2 also shows an embodiment of a system 20 comprising said at least two-stage LED driver 10 and an LED load 13 supplied by said at least two-stage LED driver 10.

In accordance with Fig. 2, the at least two-stage LED driver 10 comprises a driver stage 12 for supplying the LED load 13, a further driver stage 14 for supplying said driver stage 12, said further driver stage 14 being electrically isolated and clocked on a primary side of the at least two-stage LED driver 10 and having a regulated output voltage.

In addition to this, the at least two-stage LED driver 10 comprises at least one control circuit 15 on said primary side. In this context, the at least one control circuit 15 is configured to switch off the driver stage 12 when the external bus signal 11 is received, preferably by using at least one further control circuit 16 on a secondary side of the at least two-stage LED driver 10. Additionally, the at least one control circuit 15 is configured to at least greatly reduce a power transmission of the further driver stage 14.

It is noted that it might be particularly advantageous if, especially in the context of at least greatly reducing the power transmission of the further driver stage 14, the at least one control circuit 15 is configured to manipulate a feedback signal returning an actual value of the regulated output voltage.

It is further noted that it might be particularly advantageous if, especially in the context of at least greatly reducing the power transmission of the further driver stage 14, the at least one control circuit 15 is configured to manipulate a nominal value of the regulated output voltage.

With respect to the above-mentioned term "at least greatly reducing", it is noted that said term may especially understood as a corresponding reduction of at least 90 per cent, preferably of at least 95 per cent, more preferably of at least 97 per cent, most preferably of at least 99 per cent or of 100 per cent.

Furthermore, it is noted that it might be particularly advantageous if, especially in the context of switching off the driver stage 12 and/or at least greatly reducing the power transmission of the further driver stage 14, the at least one control circuit 15 is configured to enter a burst-mode of the at least two-stage LED driver 10.

Moreover, with respect to the driver stage 12, it is noted that it might be particularly advantageous if the driver stage 12 is configured to dim the LED load 13, preferably depending on the external bus signal 11.

It is further noted that it might be particularly advantageous if the driver stage 12 comprises or is a switch, preferably a PWM switch. Said switch or PWM switch, respectively, may especially connected in series to the LED load 13.

Furthermore, with respect to the at least two-stage LED driver 10, it is noted that it might be particularly advantageous if the at least two-stage LED driver 10 comprises or is a flyback converter, preferably a flyback converter with electrical isolation.

With respect to the external bus signal 11, it is noted that it might be particularly advantageous if said external bus signal 11 comprises or is a DALI (Digital Addressable Lighting Interface) signal, especially a DALI input signal.

With respect to the at least one control circuit 15, it is noted that it might be particularly advantageous if said at least one control circuit 15 comprises or is a microcontroller or an ASIC, preferably an ASIC.

With respect to the at least one further control circuit 16, it is noted that it might be particularly advantageous if said at least one further control circuit 16 comprises or is a microcontroller or an ASIC, preferably a microcontroller.

Again, with respect to the external bus signal 11, it is noted that it might be particularly advantageous if said external bus signal 11 is forwarded from the primary side, exemplarily via an optocoupler, especially via the corresponding galvanic or electrical isolation, to the at least one further control circuit 16 on the secondary side.

For instance, as indicated above, it might be particularly advantageous if the feedback signal, which returns the actual value of the regulated output voltage to the at least one control circuit 15 on the primary side, is manipulated at the same time as the LED load 13 is switched off, exemplarily by opening the switch or PWM switch, respectively, in series with the LED load 13. Accordingly, the feedback signal is exemplarily manipulated at the same time as the LED load 13 or the (PWM) switch, respectively, is switched off in such a way that a high output voltage appears to be present and thus the at least one control circuit 15 on the primary side will greatly reduce or even stop the energy transfer.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A method for switching off an at least two-stage converter with the aid of an external bus signal, the method comprising the steps of:
switching off (101) a driver stage supplying an LED load when the external bus signal is received, and
at least greatly reducing (102) a power transmission of a further driver stage supplying said driver stage, said further driver stage being electrically isolated and clocked on a primary side of the at least two-stage converter and having a regulated output voltage.

2. The method according to claim 1,
wherein reducing the power transmission of the further driver stage comprises manipulating a feedback signal returning an actual value of the regulated output voltage.

3. The method according to claim 1 or 2,
wherein reducing the power transmission of the further driver stage comprises manipulating a nominal value of the regulated output voltage.

4. The method according to any of the claims 1 to 3,
wherein switching off the driver stage and/or reducing the power transmission of the further driver stage comprises entering a burst-mode of the at least two-stage converter.

5. The method according to any of the claims 1 to 4, further comprising the step of:
using the driver stage for dimming the LED load, preferably depending on the external bus signal.

6. The method according to any of the claims 1 to 5,
wherein the driver stage comprises or is a switch, preferably a PWM switch.

7. The method according to any of the claims 1 to 6,
wherein the at least two-stage converter comprises or is a flyback converter, preferably a flyback converter with isolation.

8. An at least two-stage LED driver (10) being off-switchable by an external bus signal (11), comprising:
a driver stage (12) for supplying an LED load (13),
a further driver stage (14) for supplying said driver stage (12), said further driver stage (14) being electrically isolated and clocked on a primary side of the at least two-stage LED driver (10) and having a regulated output voltage, and
at least one control circuit (15) on said primary side, wherein the at least one control circuit (15) is configured to switch off the driver stage (12) when the external bus signal (11) is received, preferably by using at least one further control circuit (16) on a secondary side of the at least two-stage LED driver (10), and
wherein the at least one control circuit (15) is configured to at least greatly reduce a power transmission of the further driver stage (14).

9. The at least two-stage LED driver (10) according to claim 8,
wherein, especially in the context of reducing the power transmission of the further driver stage (14), the at least one control circuit (15) is configured to manipulate a feedback signal returning an actual value of the regulated output voltage.

10. The at least two-stage LED driver (10) according to claim 8 or 9,
wherein, especially in the context of reducing the power transmission of the further driver stage (14), the at least one control circuit (15) is configured to manipulate a nominal value of the regulated output voltage.

11. The at least two-stage LED driver (10) according to any of the claims 8 to 10,
wherein, especially in the context of switching off the driver stage (12) and/or reducing the power transmission of the further driver stage (14), the at least one control circuit (15) is configured to enter a burst-mode of the at least two-stage LED driver (10).

12. The at least two-stage LED driver (10) according to any of the claims 8 to 11,
wherein the driver stage (12) is configured to dim the LED load (13), preferably depending on the external bus signal (11) .

13. The at least two-stage LED driver (10) according to any of the claims 8 to 12,
wherein the driver stage (12) comprises or is a switch, preferably a PWM switch.

14. The at least two-stage LED driver (10) according to any of the claims 8 to 13,
wherein the at least two-stage LED driver (10) comprises or is a flyback converter, preferably a flyback converter with isolation.

15. A system (20), comprising:
an at least two-stage LED driver (10) according to any of the claims 8 to 14, and
an LED load (13) supplied by said at least two-stage LED driver (10).

## Amended claims

### Amended claims in accordance with Rule 137(2) EPC.

1. A method for switching off an at least two-stage converter with the aid of an external bus signal, the method comprising the steps of:
switching off (101) a driver stage supplying an LED load when the external bus signal is received, and
at least greatly reducing (102) a power transmission of a further driver stage supplying said driver stage, said further driver stage being electrically isolated and clocked on a primary side of the at least two-stage converter and having a regulated output voltage,
**characterized in that** reducing the power transmission of the further driver stage comprises manipulating a nominal value of the regulated output voltage.

2. The method according to claim 1,
wherein reducing the power transmission of the further driver stage comprises manipulating a feedback signal returning an actual value of the regulated output voltage.

3. The method according to claims 1 or 2,
wherein switching off the driver stage and/or reducing the power transmission of the further driver stage comprises entering a burst-mode of the at least two-stage converter.

4. The method according to any of the claims 1 to 3, further comprising the step of:
using the driver stage for dimming the LED load, preferably depending on the external bus signal.

5. The method according to any of the claims 1 to 4,
wherein the driver stage comprises or is a switch, preferably a PWM switch.

6. The method according to any of the claims 1 to 5, wherein the at least two-stage converter comprises or is a flyback converter, preferably a flyback converter with isolation.

7. An at least two-stage LED driver (10) being off-switchable by an external bus signal (11), comprising:
a driver stage (12) for supplying an LED load (13),
a further driver stage (14) for supplying said driver stage (12), said further driver stage (14) being electrically isolated and clocked on a primary side of the at least two-stage LED driver (10) and having a regulated output voltage, and
at least one control circuit (15) on said primary side, wherein the at least one control circuit (15) is configured to switch off the driver stage (12) when the external bus signal (11) is received, preferably by using at least one further control circuit (16) on a secondary side of the at least two-stage LED driver (10), and
wherein the at least one control circuit (15) is configured to at least greatly reduce a power transmission of the further driver stage (14),
**characterized in that**, especially in the context of reducing the power transmission of the further driver stage (14), the at least one control circuit (15) is configured to manipulate a nominal value of the regulated output voltage.

8. The at least two-stage LED driver (10) according to claim 7,
wherein, especially in the context of reducing the power transmission of the further driver stage (14), the at least one control circuit (15) is configured to manipulate a feedback signal returning an actual value of the regulated output voltage.

9. The at least two-stage LED driver (10) according to claims 7 or 8,
wherein, especially in the context of switching off the driver stage (12) and/or reducing the power transmission of the further driver stage (14), the at least one control circuit (15) is configured to enter a burst-mode of the at least two-stage LED driver (10).

10. The at least two-stage LED driver (10) according to any of the claims 7 to 9,
wherein the driver stage (12) is configured to dim the LED load (13), preferably depending on the external bus signal (11).

11. The at least two-stage LED driver (10) according to any of the claims 7 to 10,
wherein the driver stage (12) comprises or is a switch, preferably a PWM switch.

12. The at least two-stage LED driver (10) according to any of the claims 7 to 11,
wherein the at least two-stage LED driver (10) comprises or is a flyback converter, preferably a flyback converter with isolation.

13. A system (20), comprising:
an at least two-stage LED driver (10) according to any of the claims 7 to 12, and
an LED load (13) supplied by said at least two-stage LED driver (10).
